# FASCICULE DE BREVET EUROPEEN

(11) **EP 3 628 038 B1**
(45) Date de publication et mention de la délivrance du brevet: **12.02.2025**
(21) Numéro de dépôt: 18735674.6
(22) Date de dépôt: 12.06.2018
(51) Int. Cl.: B62D 5/00, B62D 9/00

(54) **MODIFICATION DE LA TRAJECTOIRE D'UNE ROUE DE VÉHICULE EN CAS DE DEFAILLANCE DE SYSTÈME DE DIRECTION**
TRAJEKTORIE ÄNDERUNG EINES FAHRZEUGRADES FALLS DAS LENKSYSTEM VERSAGT
CHANGE OF TRAJECTORY OF A VEHICLE WHEEL IN CASE THE STEERING SYSTEM FAILS

(30) Priorité: 12.06.2017 FR 1755236
(43) Date de publication de la demande: 01.04.2020
(73) Titulaire: Hitachi Astemo France, 93700 Drancy (FR)
(72) Inventeur: PASQUET, Thierry, 94700 Vincennes (FR)
(74) Mandataire: Brevalex
(86) Numéro de dépôt international: PCT/FR2018/051362
(87) Numéro de publication internationale: WO 2018/229412

(56) Documents cités:
- EP-A1- 3 090 907
- US-A1- 2012 283 907
- US-A1- 2013 253 793
- US-A1- 2016 132 055

## Description

### DOMAINE TECHNIQUE

L'invention se rapporte aux systèmes de freinage pour véhicule et à la détection de la vitesse de rotation d'une roue de véhicule. Elle concerne en particulier une automobile.

### ÉTAT DE LA TECHNIQUE ANTÉRIEURE

Des automobiles connues sont équipées d'un système de freinage et d'un système de direction qui comprend un volant et une colonne de direction qui est reliée mécaniquement aux roues du véhicule. Un tel véhicule est décrit selon le préambule de la revendication 1 dans le document US 2012/283907 A1.

Le système de freinage comprend un système antiblocage des roues et des freins. Le système antiblocage comprend un détecteur de vitesse de rotation d'au moins une des roues du véhicule.

Il existe un besoin pour diriger le véhicule et le faire tourner en cas de défaillance du système de direction.

### EXPOSÉ DE L'INVENTION

A cet égard, l'invention a pour objet un véhicule motorisé. Le véhicule comprend une première roue située latéralement d'un premier côté du véhicule, et une deuxième roue située latéralement d'un deuxième côté du véhicule opposé au premier côté. Le véhicule comprend un système de direction configuré pour modifier l'orientation des roues et pour faire tourner le véhicule.

Le véhicule comprend un modificateur de trajectoire configuré pour faire varier la vitesse de rotation de la première roue et modifier la trajectoire du véhicule en cas de défaillance du système de direction.

Le modificateur de trajectoire est configuré pour que le frein augmente effort de freinage de la première roue pour faire tourner le véhicule vers le côté de la première roue. Le modificateur de trajectoire est configuré pour que le frein diminue un effort de freinage de la première roue pour faire tourner le véhicule vers le côté de la deuxième roue.

Le frein est un frein électromécanique comprenant une unité de commande configurée pour commander le freinage de la première roue.

Grâce au modificateur de trajectoire et en particulier à l'unité de commande locale, il est possible de diriger le véhicule en cas de défaillance du système de direction, tout en limitant la complexité du véhicule, sa masse et son encombrement. Le modificateur de trajectoire limite les risques d'accidents en cas de défaillance du système de direction.

L'invention peut comporter de manière facultative une ou plusieurs des caractéristiques suivantes combinées entre elles ou non.

Selon une particularité de réalisation, le modificateur de trajectoire est configuré pour faire varier la vitesse de rotation de la première roue en fonction d'un signal représentatif d'une vitesse de rotation de la première roue qui est transmis par un détecteur de vitesse de rotation de la première roue.

Selon une particularité de réalisation, le véhicule comprend un système antiblocage de la première roue qui comprend le détecteur de vitesse de rotation.

Selon une particularité de réalisation, le modificateur de trajectoire comprend un comparateur de vitesse de rotation configuré pour comparer la vitesse de rotation de la première roue avec une vitesse de rotation de la deuxième roue.

Selon une particularité de réalisation, le modificateur de trajectoire est configuré pour modifier la vitesse de rotation de la roue si la valeur absolue de l'écart entre la vitesse de rotation de la première roue et la vitesse de rotation de la deuxième roue est supérieure à une valeur seuil.

Selon une particularité de réalisation, le modificateur de trajectoire est configuré pour modifier la trajectoire de la roue en fonction d'une trajectoire idéale du véhicule qui est élaborée à partir :
d'un signal transmis par un système de détection de positionnement du véhicule, et/ou
d'un signal transmis par un détecteur d'orientation d'un volant du système de direction et/ou d'une colonne de direction du système de direction.

Selon une particularité de réalisation, le modificateur de trajectoire de la roue comprend un frein à disque conçu pour freiner la première roue.

Selon une particularité de réalisation, l'unité de commande du frein de la première roue est configurée pour communiquer directement avec un frein de la deuxième roue par une liaison filaire.

Selon une particularité de réalisation, le frein comprend un dispositif de freinage hydraulique pour assurer le freinage de service de la première roue, le dispositif de freinage hydraulique étant raccordé à un circuit hydraulique du véhicule.

L'invention concerne un procédé de modification de la trajectoire d'un véhicule tel que défini ci-dessus.

Le procédé comprend la modification de la vitesse de rotation de la première roue pour modifier la trajectoire du véhicule, par le modificateur de trajectoire, en cas de défaillance du système de direction du véhicule.

### BRÈVE DESCRIPTION DES DESSINS

La présente invention sera mieux comprise à la lecture de la description d'exemples de réalisation, en référence aux dessins annexés sur lesquels :
- la figure 1 est une représentation schématique partielle d'un véhicule, selon un premier mode de réalisation de l'invention ;
- la figure 2 est une représentation schématique illustrant la mise en œuvre d'un procédé de modification de la trajectoire du véhicule selon le premier mode de réalisation.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

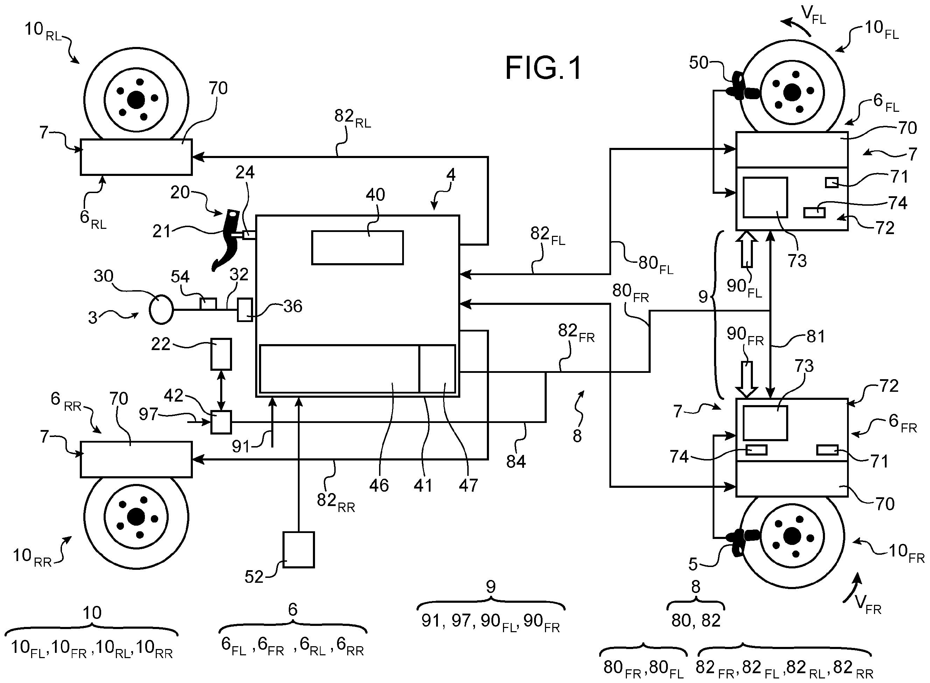

La figure 1 représente un véhicule motorisé 1. Dans le mode de réalisation représenté, il s'agit d'un véhicule automobile. Le véhicule 1 comprend une roue avant gauche 10_{FG}, une roue avant droite10_{FR}, une roue arrière gauche 10_{RG} et une roue arrière droite10_{RR}. Il comporte également un système de freinage 2, un système de direction 3 et un système de contrôle 5 du véhicule.

Le système de direction 3 comprend un volant 30, une colonne de direction 32 et un boitier de direction 36. Le système de direction 3 est configuré pour modifier l'orientation des roues 10 du véhicule et pour faire tourner le véhicule 1.

Le boitier de direction 36 comprend par exemple un pignon, une crémaillère, des biellettes et des portes-fusée. Il sert à transformer un mouvement de rotation du volant 30 et de la colonne de direction 32 en un mouvement de translation pour faire tourner les roues 10.

Le système de contrôle 5 comprend par exemple des détecteur de vitesse de rotation 50 de chacune des roues 10 du véhicule, un détecteur de la vitesse globale du véhicule, un détecteur de la vitesse de lacet du véhicule, un système de détection de positionnement du véhicule 52, et un détecteur d'orientation 54 du volant et/ou de la colonne de direction 32.

Le système de contrôle 5 comporte des moyens matériels et/ou logiciels de détection de défaillance de tout ou partie du système de direction 3.

Chaque détecteur de vitesse de rotation 50 détecte la vitesse de rotation de la roue 10 correspondante. Le système de détection de positionnement du véhicule 52 est par exemple un système connu sous le nom de « GPS ». Le détecteur d'orientation 54 détecte l'intensité du braquage qu'un utilisateur U souhaite appliquer au véhicule 1.

Le système de freinage 2 est destiné à freiner les roues 10 du véhicule. Il comprend des freins à disque 6 pour freiner les roues 10, un système d'actionnement 20, un système de commande de freinage 4, un réseau de commande de freinage 8 et un réseau d'alimentation électrique de puissance 9.

Le système d'actionnement 20 de freinage comprend des actionneurs de freinage 21, 22 et au moins un détecteur d'actionnement 24.

Les actionneurs comprennent une pédale de frein 21 pour le freinage de service, et un bouton de commande 22 pour le freinage de stationnement et le freinage d'urgence. La pédale de frein 21 est destinée à être enfoncée par un pied d'un utilisateur U pour freiner le véhicule 1. Le bouton de commande 22 est un bouton de freinage de stationnement. Le détecteur d'actionnement 24 est relié au système de commande 4 et il sert à détecter l'enfoncement de la pédale 21 et/ou du bouton de commande 22.

Le système de commande de freinage 4 comprend un amplificateur de freinage 40, un correcteur électronique de trajectoire 44, une unité de commande auxiliaire 42, un système antiblocage de roue et un boitier 41.

L'amplificateur de freinage 40 est configuré pour augmenter l'effort de freinage qui est transmis par la pédale de frein 21 au réseau de commande 8, lorsque le détecteur 24 détecte l'enfoncement de la pédale de frein 21.

Le correcteur électronique de trajectoire 44 comprend un actionneur hydraulique 47 et une unité de commande centrale 46. Il est configuré pour ordonner à chacun des freins 6 de freiner la roue 10 correspondante via le réseau de commande 8.

L'actionneur hydraulique 47 comprend un accumulateur hydraulique et une pompe de pressurisation du circuit hydraulique 82 qui est commune à l'amplificateur de freinage 40 et au correcteur électronique de trajectoire 44.

L'unité de commande centrale 46 est configuré pour commander l'actionneur hydraulique 47. De manière générale, elle commande le freinage hydraulique et/ou électromécanique de chacun des freins avant gauche 6_{FL}, avant droit 6_{FR}, arrière gauche 6_{RL}, et arrière droit 6_{RR} indépendamment des autres via le réseau de commande 8.

Le correcteur électronique de trajectoire 44 et l'amplificateur de freinage 40 sont logés au sein d'un même boitier 41, ce qui permet de limiter les redondances dans le système de freinage 2, de limiter la masse du système de freinage 2 et son encombrement.

L'unité de commande auxiliaire 42 commande le freinage de stationnement du véhicule 1, lorsque le bouton de commande 32 est enfoncé. Elle commande éventuellement le freinage d'urgence du véhicule, lorsque le bouton 32 de commande est enfoncé.

Le système antiblocage des roues est également connu sous l'acronyme en anglais d' « ABS ». Il comprend une unité de commande, par exemple l'unité de commande centrale 46. Cette unité de commande est configurée pour optimiser le freinage de chacune des roues 10, en empêchant notamment leur glissement, en fonction des vitesses de rotation de roues détectées.

Les freins 6 sont des freins à disque de véhicule. Le véhicule 1 comprend un frein avant gauche 6_{FL} pour freiner la roue avant gauche 10_{FL}, un frein avant droit 6_{FR} pour freiner la roue avant droite 10_{FR}, un frein arrière gauche 6_{RL} pour freiner la roue arrière gauche 10_{FL}, un frein arrière droit 6_{RR} pour freiner la roue arrière droite 10_{RR}.

Chacun des freins à disque 6 comporte un étrier 7 de type flottant, un piston 71 logé dans un corps de l'étrier 7, un disque, et des patins de freins destinés à enserrer le disque et déplaçables par le piston 71.

Chaque étrier 7 des freins avant 6_{FL}, 6_{FR} comprend un dispositif de freinage hydraulique 70 et un dispositif de freinage électromécanique 72. L'étrier 7 comporte également un moyen de connexion hydraulique, un moyen de raccordement d'alimentation et un moyen de connexion et d'échange de données.

Le dispositif de freinage hydraulique 70 est de structure connue. Il permet d'assurer le freinage hydraulique de la roue 6 correspondante. Il assure notamment le freinage de service de la roue 6. Le moyen de connexion hydraulique sert à raccorder le dispositif de freinage hydraulique 70 au circuit hydraulique 82 qui fait partie du réseau de commande 8.

Le dispositif de freinage électromécanique 72 comprend un actionneur électromécanique 74 et une unité de commande locale de freinage 73. Le dispositif de freinage électromécanique 72 est relié à un réseau de type CAN 80 du réseau de commande 8 par un moyen de connexion et d'échange de données. Il est alimenté électriquement, au moins partiellement indépendamment du système de commande 4, par le réseau d'alimentation 9.

Le dispositif de freinage électromécanique 72 est configuré pour assurer le freinage électromécanique de la roue 10 correspondante. Il assure notamment le freinage de stationnement et le freinage d'urgence de la roue.

L'actionneur électromécanique 74 comprend un moteur électrique et un dispositif de transmission qui provoque le déplacement du piston 71 lorsqu'il est entrainé par le moteur électrique.

L'unité de commande locale 73 comprend une interface CAN par laquelle elle est reliée par le réseau de commande 8 à l'unité de commande centrale 46, à l'unité de commande auxiliaire 42 et à l'unité de commande 73 des autres freins 6. Cette interface CAN fait partie du moyen de connexion.

Chaque unité de commande locale 73 est configurée pour commander le moteur électrique de l'actionneur électromécanique 74 du frein correspondant. Elle commande ainsi localement le freinage de la roue 6.

En fonctionnement normal, chaque unité de commande locale 73 est par exemple configurée pour freiner la roue sur ordre de l'unité de commande centrale 46, de l'unité de commande auxiliaire 42 et/ou de l'amplificateur 40.

En cas de défaillance du système de direction 3, chacune des unités de commande 73 est configurée pour modifier la trajectoire du véhicule 1 par freinage, au moins partiellement indépendamment du système de commande 4 et du système de direction 3.

En cas de défaillance du système de direction 3, chaque unité de commande locale 73 est par exemple configurée pour modifier la trajectoire du véhicule par freinage, indépendamment de l'unité de commande centrale 46, de l'unité de commande auxiliaire 42 et/ou de l'amplificateur 40.

L'unité de commande 73 de chaque frein avant 6_{FR}, 6_{FL} est configurée pour faire varier la vitesse de rotation V_{FL}, V_{FR} de la roue correspondante 10_{FR}, 10_{FL} par freinage, pour modifier la trajectoire du véhicule 1.

L'unité de commande 73 de chaque frein avant 6_{FR}, 6_{FL} est configurée pour faire varier la vitesse de rotation V_{FL}, V_{FR} de la roue correspondante, en fonction de sa vitesse de rotation V_{FL}, V_{FR} qui est détectée par son détecteur de vitesse de rotation 50.

Elle est configurée pour faire varier la vitesse de rotation V_{FL}, V_{FR} de la roue correspondante 10_{FR}, 10_{FL} également en fonction de la vitesse de rotation V_{FL}, V_{FR} de la roue avant du côté opposé 10_{FR}, 10_{FL}.

Elle fait varier la vitesse de rotation de rotation V_{FL}, V_{FR} de la roue correspondante 10_{FR}, 10_{FL}, en fonction d'une trajectoire automatique du véhicule 1 qui est élaborée à partir des informations transmises par le système de contrôle 5.

Elle fait aussi varier la vitesse de rotation de rotation V_{FL}, V_{FR} de la roue correspondante 10_{FR}, 10_{FL}, aussi en fonction d'une demande de braquage de la part de l'utilisateur U.

L'unité de commande 73 de chaque frein 6 est configurée pour commander la réduction temporaire de l'effort de freinage exercé sur la roue correspondante 10 lorsque cette roue 10 commence à glisser. Elle forme ainsi un système antiblocage local de la roue 10. Ce système antiblocage local peut agir en complément du système antiblocage des roues décrit ci-dessus.

Chacun des freins avant 6_{FL}, 6_{FR} joue ainsi le rôle de modificateur de la trajectoire du véhicule 1, en cas de défaillance du système de direction 3.

Le fonctionnement de chaque frein avant 6_{FR}, 6_{FL} et de son unité de commande 73 est expliqué ci-dessous, en référence au frein avant gauche 6_{FL} pour plus de clarté. Le frein avant droit 6_{FR} a une structure et un fonctionnement analogue à celui du frein avant gauche 6_{FL}.

En cas de défaillance du système de direction 3, l'unité de commande 73 du frein avant gauche 6_{FL} est configurée pour ordonner à l'actionneur 74 de ce frein une variation de l'effort de freinage exercé sur la roue avant gauche 10_{FL} pour modifier la trajectoire du véhicule 1.

L'unité de commande 73 du frein avant gauche 6_{FL} est configurée pour ordonner à l'actionneur 74 une augmentation de l'effort de freinage exercé sur la roue avant gauche 10_{FL} relativement à la roue avant droite 10_{FR}, pour faire tourner le véhicule 1 vers la gauche.

L'unité de commande 73 du frein avant gauche 6_{FL} est configurée pour ordonner à l'actionneur 74 une réduction de l'effort de freinage exercé sur la roue avant gauche 10_{FL} relativement à la roue avant droite 10_{FR}, pour faire tourner le véhicule 1 vers la droite.

L'unité de commande 73 du frein avant gauche 6_{FL} est configurée pour modifier la vitesse de rotation V_{FL} de la roue avant gauche 10_{FL}, en fonction de :
- la trajectoire automatique du véhicule 1 qui est élaborée à partir des informations transmises par le système de contrôle 5, en cas de défaillance du système de direction 3, et
- de la demande de braquage de l'utilisateur U,
- de la vitesse de lacet du véhicule, de la vitesse globale du véhicule,
- de la vitesse de rotation de la roue avant gauche V_{FL}, et
- de l'écart de vitesse entre la vitesse de rotation de la roue avant gauche V_{FL} et la vitesse de rotation de la roue avant droite V_{FR}.

L'unité de commande 73 du frein avant gauche 6_{FL} est notamment configurée pour comparer la vitesse de rotation V_{FL} de la roue avant gauche 10_{FL} avec la vitesse de rotation V_{FR} de la roue avant droite 10_{FR}. L'unité de commande 73 joue ainsi le rôle de comparateur de vitesse de rotation des roues avant 10_{FL}, 10_{FR}.

Le frein avant gauche 6_{FL} est configuré pour faire varier la vitesse de rotation V_{FL} de la roue avant gauche 10_{FL} en cas d'écart de vitesse de rotation trop important entre les deux roues avant 10_{FL}, 10_{FR}.

Autrement dit, le frein avant gauche 6_{FL} est configuré pour faire varier la vitesse de rotation V_{FL} de la roue avant gauche 10_{FL} si la valeur absolue de l'écart « d » entre la vitesse de rotation V_{FL} de la roue avant gauche 10_{FL} et la vitesse de rotation V_{FR} de la roue avant droite 10_{FR} est supérieure à une valeur seuil S₀.

Le frein avant gauche 6_{FL} est configuré pour freiner davantage la roue avant gauche 10_{FL} si sa vitesse est trop supérieure à celle de la roue avant droite 10_{FR}. Le frein avant gauche 6_{FL} est configuré pour freiner moins la roue avant gauche 10_{FL} si sa vitesse est trop inférieure à celle de la roue avant droite 10_{FR}.

Les freins arrière 6_{RL} et 6_{RR} sont de structure identique à celles des freins avant, sauf qu'ils ne comprennent pas de dispositif électromécanique 72 de freinage.

Le réseau de commande 8 comprend un réseau transmission de données 80 et un circuit hydraulique 82.

Le réseau transmission de données 80 est un réseau de type CAN, de l'anglais « control area network ». Ce réseau de type CAN 80 respecte notamment les conditions de la norme ISO 11898. Il s'agit d'un réseau filaire.

Le réseau de type CAN 80 comprend des lignes de commande de freinage 80_{FL}, 80_{FR}, 81, 84 qui relient entre elles les unités de commande du véhicule, dont l'unité de commande centrale 46, l'unité de commande auxiliaire 42 et les unités de commande 73 des freins avant 6.

Le réseau de type CAN 80 comprend une ligne de commande de freinage de la roue avant gauche 80_{FL} et une ligne de commande de freinage de la roue avant droite 80_{FR}.

La ligne de commande de freinage de la roue avant gauche 80_{FL} relie l'amplificateur 40 et le correcteur électronique de trajectoire 44 à l'unité de commande 73 du frein avant gauche 6_{FL}. La ligne de commande de freinage de la roue avant droite 80_{FR} relie l'amplificateur 40 et le correcteur électronique de trajectoire 44 à l'unité de commande 73 du frein avant droit 6_{FR}.

La ligne de commande de freinage de stationnement 84 relie les freins 6 à l'unité de commande auxiliaire 42.

La ligne d'échange de données 81 entre les deux freins 6_{FR}, 6_{FL} relie directement entre elles les unités de commandes 73 des freins avant gauche 6_{FL} et droit 6_{FR} par leurs interfaces CAN.

Le circuit hydraulique 82 est un circuit de pressurisation des freins 6. Il comprend une ligne hydraulique de freinage avant gauche 82_{FL}, une ligne hydraulique de freinage avant droite 82_{FR}, une ligne hydraulique de freinage arrière gauche 82_{RL}, une ligne hydraulique de freinage arrière droite 82_{RR}.

La ligne hydraulique de freinage avant gauche 82_{FL} relie fluidiquement l'actionneur hydraulique 47 au dispositif hydraulique de freinage 70 du frein avant gauche 6_{FL}. La ligne hydraulique de freinage avant droite 82_{FR} relie fluidiquement l'actionneur hydraulique 47 au dispositif hydraulique de freinage 70 du frein avant droit 6_{FR}.

La ligne hydraulique de freinage arrière gauche 82_{RL} relie fluidiquement l'actionneur hydraulique 47 au dispositif hydraulique de freinage 70 du frein arrière gauche 6_{RL}. La ligne hydraulique de freinage arrière droite 82_{RR} relie fluidiquement l'actionneur hydraulique 47 au dispositif hydraulique de freinage 70 du frein arrière droit 6_{RR}.

Le réseau d'alimentation 9 comprend une ligne d'alimentation électrique de puissance 91 pour alimenter électriquement le système de commande 4 dans le boitier 41, une ligne d'alimentation électrique de puissance 97 pour alimenter électriquement l'unité de commande auxiliaire 42, et une ligne d'alimentation électrique de puissance 90 pour alimenter chacun des freins avant 6_{FL}, 6_{FR}.

Plus précisément, le réseau d'alimentation 9 comprend une ligne d'alimentation électrique de puissance 90_{FL} du frein avant gauche 6_{FL}, et une ligne d'alimentation électrique de puissance 90_{FR} du frein avant droit 6_{FR}.

Le réseau d'alimentation 9 est configuré pour apporter l'énergie à chacun des dispositifs de freinage électromécanique 72 qui leur est nécessaire pour fonctionner indépendamment l'un de l'autre, y compris en cas de défaillance du système de direction 3.

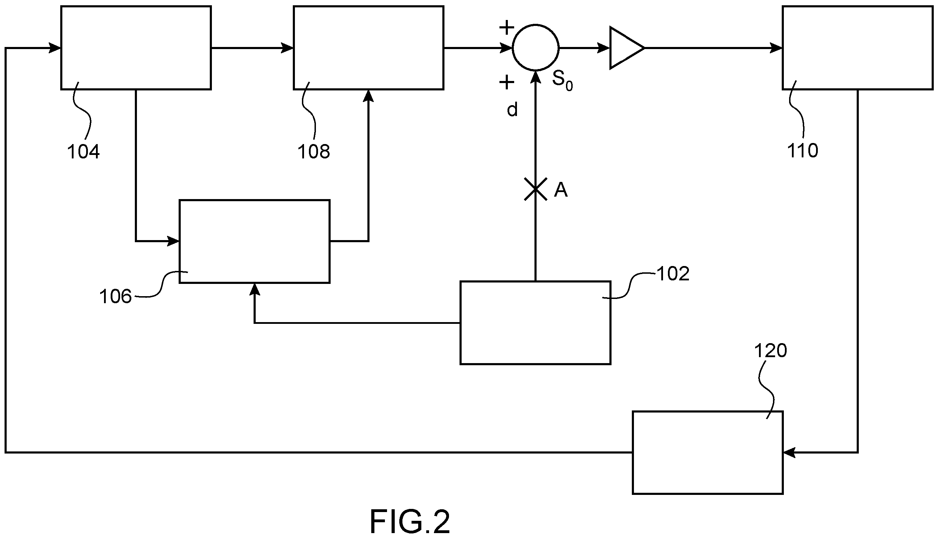

Le procédé de modification de la trajectoire du véhicule 1 par freinage, en cas de défaillance du système de direction 3 est décrit ci-après en référence à la figure 2.

Cette défaillance du système de direction 3 a par exemple pour cause la rupture de la colonne de direction 32. Elle est représentée par la croix A à la figure 2.

Le système de contrôle 5 détecte l'intensité du braquage éventuel qu'un utilisateur U souhaite appliquer aux roues avant 10_{FR}, 10_{FL}, malgré la défaillance du système de direction 3, à l'étape 102. La trajectoire que l'utilisateur U souhaite imposer au véhicule 1 est par la suite appelée trajectoire utilisateur.

Par ailleurs, le système de contrôle 5 et le système de commande 4 élaborent une trajectoire automatique du véhicule 1, à l'étape 104. Cette trajectoire automatique du véhicule est élaborée à partir : de la vitesse globale du véhicule, de sa vitesse de lacet, des informations transmises par le système de détection de positionnement 52, et des informations transmises par le détecteur d'orientation 54.

Le système de contrôle 5 et le système de commande 4 élaborent ensuite une trajectoire idéale du véhicule 1, à partir de la trajectoire utilisateur et de la trajectoire automatique, à l'étape 106.

Le système de commande 4 et/ou chacune des unités de commande locale 73 élaborent ensuite une prévision automatique de variation de freinage des chacune des roues avant 10_{FR}, 10_{FL} pour que le véhicule 1 suive sa trajectoire idéale et pour le faire tourner le cas échéant, à l'étape 108.

Les prévisions automatiques de freinage donnent lieu à une demande de freinage spécifique pour chaque roue avant 10_{FL}, 10_{FR}, à l'étape 110. L'unité de commande 73 du frein associé à la roue correspondante 10_{FL}, 10_{FR} ordonne ensuite à l'actionneur correspondant 74 de freiner ou non la roue 10_{FL}, 10_{FR}, à l'étape 120.

La trajectoire automatique du véhicule est à nouveau déterminée à l'étape 104 par le système de contrôle 5 et le système de commande 4, en prenant en compte le freinage effectuée pour chacune des roues avant 10_{FL}, 10_{FR}.

Le processus décrit ci-dessus est ensuite réitéré tant que le système de direction 3 est défaillant et jusqu'à l'arrêt du véhicule 1.

Les freins avant 6_{FL} et 6_{FR} permettent de diriger le véhicule en cas de défaillance du système de direction 3, ce qui limite le risque d'accident. Le véhicule 1 selon l'invention peut être dirigé en cas de défaillance du système de direction 3, tout en limitant sa complexité, sa masse et son encombrement.

Bien entendu, l'invention définit par l'étendue des revendications annexées.

De manière générale, le véhicule motorisé 1 comprend au moins trois roues dont une roue droite et une roue gauche. Le véhicule motorisé 1 peut être de différente nature. En variante, le véhicule 1 est un véhicule de type à selle à trois roues, une camionnette, un camion etc.

Les freins arrières gauche 6_{RL} et droite 6_{RR} peuvent être des freins électromécaniques en plus ou au lieu d'être des freins hydrauliques.

En plus ou en variante, les freins arrières 6_{RL} et 6_{RR} sont électromécaniques et comprennent chacune une unité de commande 73, pour mettre en œuvre le procédé de modification de trajectoire décrit ci-dessus.

De manière générale, il est très préférable que les freins 6 des roues motrices soient équipés chacun d'une unité de commande locale 73 telle que décrite ci-dessus.

Lorsque les freins avant 6_{FL}, 6_{FR} et arrières 6_{RL}, 6_{RR} sont purement électromécaniques, le circuit hydraulique 82 peut disparaître et être remplacé par des moyens matériels et/ou logiciels de commande de frein électrique selon l'invention, ce qui limite la complexité du système de freinage 2, la masse du véhicule 1 et son encombrement.

### NOMENCLATURE EN REFERENCE AUX FIGURES

1 : véhicule
2 : système de freinage
3 : système de direction
4 : système de commande
5 : système de contrôle
6 : freins
6_{FL} : frein avant gauche
6 _{FR} : frein avant droit
6_{RL} : frein arrière gauche
6 _{RR} : frein arrière droit
8 : réseau de commande de freinage
9 : réseau d'alimentation électrique de puissance
10 : roues
10_{FL} : roue avant gauche
10_{FR} : roue avant droite
10_{RL} : roue arrière gauche
10_{RR} : roue arrière droite
21 : pédale de frein
22 : bouton de commande
24 : détecteur d'actionnement
30 : volant
32 : colonne de direction
36 : boitier de direction
40 : amplificateur
41 : boitier
42 : unité de commande auxiliaire
44 : correcteur électronique de trajectoire
46 : unité de commande centrale
47 : actionneur hydraulique
50 : détecteur de vitesse de rotation de roue
52 : système de détection de positionnement du véhicule
54 : détecteur d'orientation du volant et/ou de la colonne de direction
70 : dispositif hydraulique de freinage
71 : piston
72 : dispositif électromécanique de freinage
73 : unité de commande
74 : actionneur électromécanique
80 : réseau de type CAN
80_{FL} ligne de commande de freinage de la roue avant gauche
80_{FR} : ligne de commande de freinage de la roue avant droite
80_{RL} : ligne de commande de freinage de la roue arrière gauche
80_{RR} : ligne de commande de freinage de la roue arrière droite
81 : La ligne d'échange de données entre les deux freins avant
82 : circuit hydraulique
82_{FL} : ligne hydraulique de freinage avant gauche
82_{FR} : ligne hydraulique de freinage avant droite
82_{RL} : ligne hydraulique de freinage arrière gauche
82_{RR} : ligne hydraulique de freinage arrière droite
90_{FL} : ligne d'alimentation électrique de puissance du frein avant gauche
90_{FR} : ligne d'alimentation électrique de puissance du frein avant droit
90_{FL} : ligne d'alimentation électrique de puissance du frein arrière gauche
90_{RR} : ligne d'alimentation électrique de puissance du frein arrière droit

## Revendications

1. Véhicule motorisé (1) comprenant :
une première roue (10_{FR}, 10_{FL}) située latéralement d'un premier côté du véhicule (1),
une deuxième roue (10_{FR}, 10_{FL}) située latéralement d'un deuxième côté du véhicule (1) opposé au premier côté, et
un système de direction (3) configuré pour modifier l'orientation des roues (10) et pour faire tourner le véhicule (1),
ledit véhicule (1) comprend un modificateur de trajectoire (6_{FR}, 6_{FL}) configuré pour faire varier la vitesse de rotation (v_{FL}, v_{FR}) de la première roue (10_{FR}, 10_{FL}) et modifier la trajectoire du véhicule (1) en cas de défaillance du système de direction (3),
**caractérisé en ce que** le modificateur de trajectoire (6_{FR}, 6_{FL}) de la roue comprenant un frein électromécanique (6_{FR}, 6_{FL}) qui comprend une unité de commande (73) locale configurée pour commander le freinage de la première roue (10_{FR}, 10_{FL}),
le modificateur de trajectoire (6_{FR}, 6_{FL}) étant configuré pour que le frein (6_{FR}, 6_{FL}) augmente un effort de freinage de la première roue (10_{FR}, 10_{FL}) pour faire tourner le véhicule (1) vers le côté de la première roue (10_{FR}, 10_{FL}), et/ou
le modificateur de trajectoire (6_{FR}, 6_{FL}) étant configuré pour que le frein (6_{FR}, 6_{FL}) diminue un effort de freinage de la première roue (10_{FR}, 10_{FL}) pour faire tourner le véhicule (1) vers le côté de la deuxième roue (10_{FR}, 10_{FL}).

2. Véhicule (1) selon la revendication précédente, dans lequel le modificateur de trajectoire (6_{FR}, 6_{FL}) est configuré pour faire varier la vitesse de rotation (v_{FL}, v_{FR}) de la première roue (10_{FR}, 10_{FL}) en fonction d'un signal représentatif d'une vitesse de rotation (v_{FL}, v_{FR}) de la première roue (10_{FR}, 10_{FL}) qui est transmis par un détecteur (50) de vitesse de rotation (v_{FL}, v_{FR}) de la première roue (10_{FR}, 10_{FL}).

3. Véhicule (1) selon la revendication précédente, comprenant un système antiblocage de roue qui comprend le détecteur (50) de vitesse de rotation (v_{FL}, v_{FR}) de la première roue (10_{FR}, 10_{FL}).

4. Véhicule (1) selon l'une quelconque des revendications précédentes, dans lequel le modificateur de trajectoire (6_{FR}, 6_{FL}) comprend un comparateur de vitesse de rotation configuré pour comparer la vitesse de rotation (v_{FL}, v_{FR}) de la première roue (10_{FR}, 10_{FL}) avec une vitesse de rotation (v_{FL}, v_{FR}) de la deuxième roue (10_{FR}, 10_{FL}).

5. Véhicule (1) selon la revendication précédente, dans lequel le modificateur de trajectoire (6_{FR}, 6_{FL}) est configuré pour modifier la vitesse de rotation (v_{FL}, v_{FR}) de la roue si la valeur absolue de l'écart (d) entre la vitesse de rotation (v_{FL}, v_{FR}) de la première roue (10_{FR}, 10_{FL}) et la vitesse de rotation (v_{FL}, v_{FR}) de la deuxième roue (10_{FR}, 10_{FL}) est supérieure à une valeur seuil (S₀).

6. Véhicule (1) selon l'une quelconque des revendications précédentes, dans lequel le modificateur de trajectoire (6_{FR}, 6_{FL}) est configuré pour modifier la trajectoire de la première roue (10_{FR}, 10_{FL}) en fonction d'une trajectoire idéale du véhicule (1) qui est élaborée à partir :
- d'un signal transmis par un système de détection de positionnement (52) du véhicule, et/ou
- d'un signal transmis par un détecteur d'orientation (54) d'un volant du système de direction (3) et/ou d'une colonne de direction du système de direction (3).

7. Véhicule (1) selon la revendication précédente, dans lequel chaque frein électromécanique (6_{FR}, 6_{FL}) comprend une unité de commande locale (73) et un actionneur électromécanique (74) comprenant un moteur électrique et un dispositif de transmission qui provoque le déplacement d'un piston (71) lorsqu'il est entrainé par le moteur électrique, et chaque unité de commande locale (73) est configurée pour commander le freinage d'une roue correspondante (10_{FR}, 10_{FL}) du véhicule motorisé (1) par l'actionneur électromécanique (74) en cas de défaillance du système de direction (3) pour que la trajectoire du véhicule motorisé (1) suive la trajectoire idéale du véhicule qui est élaborée par le modificateur de trajectoire.

8. Véhicule (1) selon l'une quelconque des revendications précédentes, dans lequel le frein (6_{FR}, 6_{FL}) conçu pour freiner la première roue (10_{FR}, 10_{FL}) est un frein à disque.

9. Véhicule motorisé (1) selon la revendication 7, qui comprend un frein à disque avant gauche, un frein à disque avant droit, un frein à disque arrière gauche et un frein à disque arrière droit, chacun des freins à disque (6) comportant un étrier (7) de type flottant, un piston (71) logé dans le corps de l'étrier (7), un disque, des patins configurés pour enserrer le disque et déplaçables par le piston (71) ; chaque étrier (7) comportant un dispositif de freinage électromécanique (72) ; le dispositif de freinage électromécanique (72) étant relié à un réseau de type CAN (80) d'un réseau de commande (8) par un moyen de connexion et d'échange de données et étant alimenté électriquement, au moins partiellement indépendamment d'un système de commande de freinage (4), par un réseau d'alimentation (9) ; et le dispositif de freinage électromécanique (72) comportant l'actionneur électromécanique (74) correspondant qui comporte un moteur électrique et un dispositif de transmission qui provoque le déplacement du piston (71) lorsqu'il est entrainé par le moteur électrique, et l'unité de commande locale (73) correspondante qui est configurée pour commander le moteur électrique de l'actionneur électromécanique (74) pour commander le freinage de la roue (10_{FR}, 10_{FL}).

10. Véhicule (1) selon l'une quelconque des revendications précédentes, dans lequel l'unité de commande (73) est configurée pour communiquer directement avec un frein (6_{FR}, 6_{FL}) de la deuxième roue (10_{FR}, 10_{FL}) par une liaison filaire (81).

11. Véhicule (1) selon l'une quelconque des revendications précédentes, dans lequel le frein comprend un dispositif hydraulique de freinage (70) pour assurer le freinage de service de la première roue (10_{FR}, 10_{FL}), le dispositif hydraulique de freinage (70) étant raccordé à un circuit hydraulique (82) du véhicule.

12. Procédé de modification de la trajectoire d'un véhicule (1) selon l'une quelconque des revendications précédentes, comprenant :
la modification de la vitesse de rotation (v_{FL}, v_{FR}) de la première roue (10_{FR}, 10_{FL}) pour modifier la trajectoire du véhicule (1), par le modificateur de trajectoire (6_{FR}, 6_{FL}), en cas de défaillance du système de direction (3) du véhicule.

## Patentansprüche

1. Motorisiertes Fahrzeug (1), das Folgendes umfasst:
ein erstes Rad (10_{FR}, 10_{FL}), das seitlich auf einer ersten Seite des Fahrzeugs (1) angeordnet ist,
ein zweites Rad (10_{FR}, 10_{FL}), das seitlich auf einer zweiten Seite des Fahrzeugs (1) gegenüber der ersten Seite angeordnet ist, und
ein Lenksystem (3), das dazu konfiguriert ist, die Ausrichtung der Räder (10) zu modifizieren und das Fahrzeug (1) zu drehen,
wobei das Fahrzeug (1) einen Trajektorienmodifikator (6_{FR}, 6_{FL}) umfasst, der dazu konfiguriert ist, für den Fall eines Ausfalls des Lenksystems (3) die Drehzahl (V_{FL}, V_{FR}) des ersten Rads (10_{FR}, 10_{FL}) zu ändern und die Trajektorie des Fahrzeugs (1) zu modifizieren,
**dadurch gekennzeichnet, dass** der Trajektorienmodifikator (6_{FR}, 6_{FL}) des Rads eine elektromechanische Bremse (6_{FR}, 6_{FL}) umfasst, die eine lokale Steuereinheit (73) umfasst, die dazu konfiguriert ist, das Bremsen des ersten Rads (10_{FR}, 10_{FL}) zu steuern,
wobei der Trajektorienmodifikator (6_{FR}, 6_{FL}) so konfiguriert ist, dass die Bremse (6_{FR}, 6_{FL}) eine Bremskraft des ersten Rads (10_{FR}, 10_{FL}) erhöht, um das Fahrzeug (1) auf die Seite des ersten Rads (10_{FR}, 10_{FL}) zu drehen, und/oder
wobei der Trajektorienmodifikator (6_{FR}, 6_{FL}) so konfiguriert ist, dass die Bremse (6_{FR}, 6_{FL}) eine Bremskraft des ersten Rads (10_{FR}, 10_{FL}) verringert, um das Fahrzeug (1) auf die Seite des zweiten Rads (10_{FR}, 10_{FL}) zu drehen.

2. Fahrzeug (1) nach dem vorhergehenden Anspruch, wobei der Trajektorienmodifikator (6_{FR}, 6_{FL}) dazu konfiguriert ist, die Drehzahl (V_{FL}, V_{FR}) des ersten Rads (10_{FR}, 10_{FL}) als Funktion eines Signals zu ändern, das eine Drehzahl (V_{FL}, V_{FR}) des ersten Rads (10_{FR}, 10_{FL}) darstellt und von einem Detektor (50) für die Drehzahl (V_{FL}, V_{FR}) des ersten Rads (10_{FR}, 10_{FL}) übertragen wird.

3. Fahrzeug (1) nach dem vorhergehenden Anspruch, das ein Antiblockiersystem für Räder umfasst, das den Detektor (50) für die Drehzahl (V_{FL}, V_{FR}) des ersten Rads (10_{FR}, 10_{FL}) umfasst.

4. Fahrzeug (1) nach einem der vorhergehenden Ansprüche, wobei der Trajektorienmodifikator (6_{FR}, 6_{FL}) einen Drehzahlkomparator umfasst, der dazu konfiguriert ist, die Drehzahl (V_{FL}, V_{FR}) des ersten Rads (10_{FR}, 10_{FL}) mit einer Drehzahl (V_{FL}, V_{FR}) des zweiten Rads (10_{FR}, 10_{FL}) zu vergleichen.

5. Fahrzeug (1) nach dem vorhergehenden Anspruch, wobei der Trajektorienmodifikator (6_{FR}, 6_{FL}) dazu konfiguriert ist, die Drehzahl (V_{FL}, V_{FR}) des Rads zu modifizieren, wenn der Absolutwert der Abweichung (d) zwischen der Drehzahl (V_{FL}, V_{FR}) des ersten Rads (10_{FR}, 10_{FL}) und die Drehzahl (V_{FL}, V_{FR}) des zweiten Rads (10_{FR}, 10_{FL}) größer als ein Schwellenwert (S₀) ist.

6. Fahrzeug (1) nach einem der vorhergehenden Ansprüche, wobei der Trajektorienmodifikator (6_{FR}, 6_{FL}) dazu konfiguriert ist, die Trajektorie des ersten Rads (10_{FR}, 10_{FL}) als Funktion einer idealen Trajektorie des Fahrzeugs (1) zu modifizieren, die aus Folgendem erarbeitet wird:
- einem Signal, das von einem Positionierungsdetektionssystem (52) des Fahrzeugs übertragen wird, und/oder
- einem Signal, das von einem Ausrichtungsdetektor (54) für ein Lenkrad des Lenksystems (3) und/oder eine Lenksäule des Lenksystems (3) übertragen wird.

7. Fahrzeug (1) nach dem vorhergehenden Anspruch, wobei jede elektromechanische Bremse (6_{FR}, 6_{FL}) eine lokale Steuereinheit (73) und einen elektromechanischen Aktuator (74) umfasst, der einen Elektromotor und eine Übertragungsvorrichtung umfasst, die die Bewegung eines Kolbens (71) bewirkt, wenn sie durch den Elektromotor angetrieben wird, und wobei jede lokale Steuereinheit (73) dazu konfiguriert ist, für den Fall eines Ausfalls des Lenksystems (3) das Bremsen eines entsprechenden Rads (10_{FR}, 10_{FL}) des motorisierten Fahrzeugs (1) durch den elektromechanischen Aktuators (74) zu steuern, damit die Trajektorie des motorisierten Fahrzeugs (1) der idealen Trajektorie des Fahrzeugs folgt, die durch den Trajektorienmodifikator zusammengestellt wird.

8. Fahrzeug (1) nach einem der vorhergehenden Ansprüche, wobei die zum Bremsen des ersten Rads (10_{FR}, 10_{FL}) ausgelegte Bremse (6_{FR}, 6_{FL}) eine Scheibenbremse ist.

9. Motorisiertes Fahrzeug (1) nach Anspruch 7, das eine linke vordere Scheibenbremse, eine rechte vordere Scheibenbremse, eine linke hintere Scheibenbremse und eine hintere rechte Scheibenbremse umfasst, wobei jede der Scheibenbremsen (6) einen Bremssattel vom Typ Schwimmsattel (7), einen im Körper des Bremssattels (7) untergebrachten Kolben (71), eine Scheibe und Bremsbacken, die dazu konfiguriert sind, die Scheibe einzuspannen, und die durch den Kolben (71) bewegt werden können, umfasst; wobei jeder Bremssattel (7) eine elektromechanische Bremsvorrichtung (72) umfasst; wobei die elektromechanische Bremsvorrichtung (72) über ein Verbindungs- und Datenaustauschmittel mit einem CAN-Netzwerk (80) eines Steuernetzwerks (8) verbunden ist und mindestens teilweise unabhängig von einem Bremssteuerungssystem (4) durch ein Stromversorgungsnetz (9) mit Strom versorgt wird; und wobei die elektromechanische Bremsvorrichtung (72) den entsprechenden elektromechanischen Aktuator (74), der einen Elektromotor und eine Übertragungsvorrichtung umfasst, die die Bewegung eines Kolbens (71) bewirkt, wenn sie durch den Elektromotor angetrieben wird, und die entsprechende lokale Steuereinheit (73) umfasst, die dazu konfiguriert ist, den Elektromotor des elektromechanischen Aktuators (74) zu steuern, um das Bremsen des Rads (10_{FR}, 10_{FL}) zu steuern.

10. Fahrzeug (1) nach einem der vorhergehenden Ansprüche, wobei die Steuereinheit (73) dazu konfiguriert ist, über eine Kabelverbindung (81) direkt mit einer Bremse (6_{FR}, 6_{FL}) des zweiten Rads (10_{FR}, 10_{FL}) in Verbindung zu stehen.

11. Fahrzeug (1) nach einem der vorhergehenden Ansprüche, wobei die Bremse eine hydraulische Bremsvorrichtung (70) umfasst, um die Betriebsbremsung des ersten Rads (10_{FR}, 10_{FL}) sicherzustellen, wobei die hydraulische Bremsvorrichtung (70) mit einem Hydraulikkreis (82) des Fahrzeugs verbunden ist.

12. Verfahren zum Modifizieren der Trajektorie eines Fahrzeugs (1) nach einem der vorhergehenden Ansprüche, das Folgendes umfasst:
das Modifizieren der Drehzahl (V_{FL}, V_{FR}) des ersten Rads (10_{FR}, 10_{FL}), um für den Fall eines Ausfalls des Lenksystems (3) des Fahrzeugs die Trajektorie des Fahrzeugs (1) durch den Trajektorienmodifikator (6_{FR}, 6_{FL}) zu modifizieren.

## Claims

1. Motor vehicle (1) comprising:
a first wheel (10_{FR}, 10_{FL}) located sideways on a first side of the vehicle (1),
a second wheel (10_{FR}, 10_{FL}) located sideways on a second side of the vehicle (1) opposite to the first side, and
a steering system (3) configured to modify the orientation of the wheels (10) and to rotate the vehicle (1),
said vehicle (1) comprises a trajectory modifier (6_{FR}, 6_{FL}) configured to vary the rotation speed (v_{FL}, v_{FR}) of the first wheel (10_{FR}, 10_{FL}) and to modify the trajectory of the vehicle (1) in the event that the steering system (3) is failing,
**characterised by** the trajectory modifier (6FR, 6FL) of the wheel comprising an electromechanical brake (6_{FR}, 6_{FL}) which comprises a local control unit (73) configured to control the braking of the first wheel (10_{FR}, 10_{FL}),
the trajectory modifier (6_{FR}, 6_{FL}) being configured such that the brake (6_{FR}, 6_{FL}) increases a braking force of the first wheel (10_{FR}, 10_{FL}) to rotate the vehicle (1) to the side of the first wheel (10_{FR}, 10_{FL}), and/or
the trajectory modifier (6_{FR}, 6_{FL}) being configured such that the brake (6_{FR}, 6_{FL}) decreases a braking force of the first wheel (10FR, 10FL) to rotate the vehicle (1) to the side of the second wheel (10_{FR}, 10_{FL}).

2. Vehicle (1) according to the preceding claim, wherein the trajectory modifier (6_{FR}, 6_{FL}) is configured to vary the rotation speed (v_{FL}, v_{FR}) of the first wheel (10_{FR}, 10_{FL}) as a function of a signal representative of a rotation speed (v_{FL}, v_{FR}) of the first wheel (10_{FR}, 10_{FL}) which is transmitted by a detector (50) of the rotation speed (v_{FL}, v_{FR}) of the first wheel (10_{FR}, 10_{FL}).

3. Vehicle (1) according to the preceding claim, comprising a wheel antilock system which comprises the detector (50) of the rotation speed (v_{FL}, v_{FR}) of the first wheel (10_{FR}, 10_{FL}).

4. Vehicle (1) according to any of the preceding claims, wherein the trajectory modifier (6_{FR}, 6_{FL}) comprises a rotation speed comparator configured to compare the rotation speed (v_{FL}, v_{FR}) of the first wheel (10_{FR}, 10_{FL}) with a rotation speed (v_{FL}, v_{FR}) of the second wheel (10_{FR}, 10_{FL}).

5. Vehicle (1) according to the preceding claim, wherein the trajectory modifier (6_{FR}, 6_{FL}) is configured to modify the rotation speed (v_{FL}, v_{FR}) of the wheel if the absolute value of the deviation (d) between the rotation speed (v_{FL}, v_{FR}) of the first wheel (10_{FR}, 10_{FL}) and the rotation speed (v_{FL}, v_{FR}) of the second wheel (10_{FR}, 10_{FL}) is higher than a threshold value (S₀).

6. Vehicle (1) according to any of the preceding claims, wherein the trajectory modifier (6_{FR}, 6_{FL}) is configured to modify the trajectory of the first wheel (10_{FR}, 10_{FL}) as a function of an ideal trajectory of the vehicle (1) which is carried out from:
- a signal transmitted by a positioning detection system (52) of the vehicle, and/or
- a signal transmitted by an orientation detector (54) for a flywheel of a steering system (3) and/or a steering column of the steering system (3).

7. Vehicle (1) according to any of the preceding claims, wherein each electromechanical brake (6_{FR}, 6_{FL}) comprises a local control unit (73) and an electromechanical actuator (74) comprising an electric motor and a transmission device which, when driven by the electric motor, causes the movement of a piston (71), and each local control unit (73) is configured to control the braking of a corresponding wheel (10_{FR}, 10_{FL}) of the motor vehicule (1) by the electromechanical actuator (74) in case of failure of the steering system (3) for the trajectory of the motor vehicule (1) to follow the vehicule ideal trajectory which is established by the trajectory modifier.

8. Vehicle (1) according to any of the preceding claims, wherein the brake (6_{FR}, 6_{FL}) configured to brake the first wheel (10_{FR}, 10_{FL}) is a disc brake.

9. Vehicle (1) according to claim 7, which comprises a left front disc brake, a right front disc brake, a left rear disc brake and a right rear disc brake, each of the disc brakes (6) comprising a floating type calliper (7), a piston (71à housed in the body of the calliper (7), a disc, brake shoes configured for clamping the disc and movable by the piston (71) ; each calliper (7) comprising an electromechanical braking device (72) ; the electromechanical braking device (72) being connected to a CAN type network (80) of a control network (8) by a connection and data exchange means and electrically supplied, at least partially independently of the control system (4), by a supply network (9) ; and the electromechanical braking device (72) comprising the corresponding electromechanical actuator (74) which comprises an electric motor and a transmission device which, when driven by the electric motor, causes the movement of the piston (71), and the corresponding local control unit 73 which is configured to control the electric motor of the electromechanical actuator (74) to control braking of the wheel (10_{FR}, 10_{FL}).

10. Vehicle (1) according to any of the preceding claims, wherein the control unit (73) is configured to directly communicate with a brake (6_{FR}, 6_{FL}) of the second wheel (10_{FR}, 10_{FL}) through a wired connection (81).

11. Vehicle (1) according to any of the preceding claims, wherein the brake comprises a braking hydraulic device (70) to ensure the service braking of the first wheel (10_{FR}, 10_{FL}), the braking hydraulic device (70) being connected to a hydraulic circuit (82) of the vehicle.

12. Method for modifying the trajectory of a vehicle (1) according to any of the preceding claims, comprising:
modifying the rotation speed (v_{FL}, v_{FR}) of the first wheel (10_{FR}, 10_{FL}) to modify the trajectory of the vehicle (1), by the trajectory modifier (6_{FR}, 6_{FL}), in the event that the steering system (3) of the vehicle is failing.
